# FASCICULE DE BREVET EUROPEEN

(11) **EP 0 940 326 B1**
(45) Date de publication et mention de la délivrance du brevet: **25.09.2002**
(21) Numéro de dépôt: 99400227.7
(22) Date de dépôt: 02.02.1999
(51) Int. Cl.: B62D 33/02

(54) **Agencement de poteau coulissant pour véhicule bâché**
Verschiebbarer Tragpfosten für Planendächer für Fahrzeugaufbauten
Sliding roof supporting post for tarpaulins of vehicles

(30) Priorité: 04.02.1998 FR 9801301
(43) Date de publication de la demande: 08.09.1999
(73) Titulaire: POMMIER & CIE, 95310 Saint Ouen L'Aumone (FR)
(72) Inventeur: Froissard, Alain, 95110 Sannois (FR)
(74) Mandataire: Coester, Jacques Charles

(56) Documents cités:
- EP-A- 0 557 215
- BE-A- 1 005 536
- DE-U- 9 216 912
- FR-A- 2 535 655

## Description

L'invention concerne un agencement de poteau coulissant pour véhicule bâché tels que remorques, semi-remorques ou wagons de chemin de fer, du type comprenant au moins un poteau monté sur un côté du véhicule, coulissant en translation entre un longeron supérieur sensiblement horizontal solidaire du véhicule et un dispositif de support solidaire du plateau du véhicule, le poteau comportant deux parties articulées l'une à l'autre et susceptibles d'être alignées, à savoir une partie supérieure dont l'extrémité libre est montée coulissante en translation sur ledit longeron et une partie inférieure dont l'extrémité inférieure est susceptible de prendre appui sur ledit dispositif de support, et des moyens de verrouillage du poteau sur ledit plateau et des deux parties dans une position axialement alignée lorsque le poteau est verrouillé sur le plateau.

Un agencement de poteau telle que revendiqué dans le préambule de la revendication 1 est connu du document EP 0 557 215 A.

Les agencements connus de ce type présentent l'inconvénient de présenter une structure complexe sans assurer pour autant un verrouillage satisfaisant des poteaux.

La présente invention a pour but de proposer un agencement de poteau coulissant qui ne présente pas les inconvénients qui viennent d'être énoncés, de l'état de la technique.

Pour atteindre ce but, un agencement de poteaux coulissants selon l'invention est caractérisé en ce qu'il comprend un dispositif de bridage du poteau sur le dispositif de support solidaire du plateau.

Selon une caractéristique de l'invention, la partie supérieure du poteau comporte un pêne adapté pour s'engager dans une gâche du dispositif de support et la partie inférieure est réalisée sous forme d'un bras pivotant verrouillable sur la partie supérieure dans la position d'engagement du pêne dans la gâche.

Selon une caractéristique avantageuse de l'invention, le bras pivotant comporte un organe assurant le verrouillage du poteau sur le dispositif de support par appui de cet organe sur le pêne lorsque les deux parties sont verrouillées, même en l'absence de la partie d'engagement du pêne, de la gâche.

L'invention sera mieux comprise et d'autres buts, caractéristiques détails et avantages de celle-ci apparaîtront plus clairement dans la description explicative qui va suivre faite en référence aux dessins schématiques annexés donnés uniquement à titre d'exemples illustrant un mode de réalisation de l'invention et dans lesquels :
- la figure 1 est une vue en perspective d'une semi-remorque bâché équipé d'un certain nombre d'agencements de poteau coulissant selon l'invention, indiqué en A ;

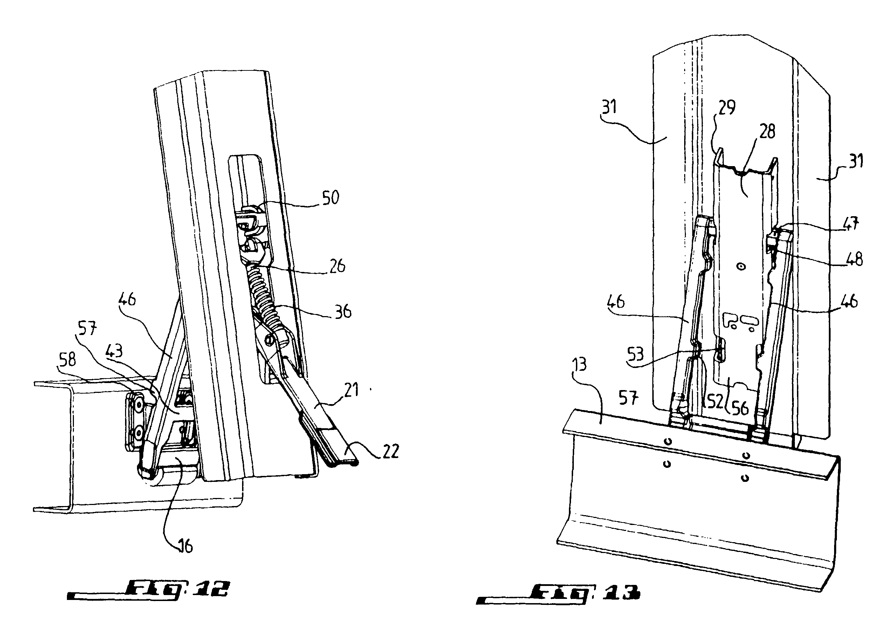

- la figure 2 est une vue latérale, avec arrachement, montrant le poteau dans sa position verrouillée sur le plateau du véhicule ;
- la figure 3 est une vue en coupe le long de la ligne III-III de la figure 2 ;
- la figure 4 est une vue similaire à la figure 3, mais montrant le verrouillage sur la semi-remorque en l'absence de la gâche du dispositif de support solidaire du plateau ;
- la figure 5 est une vue en coupe similaire à la figure 3, mais montrant le poteau dans la position déverrouillée ;
- la figure 6 est une vue en coupe, avec arrachement, le long de la ligne VI-VI de la figure 2;
- la figure 7 est une vue en coupe, avec arrachement, le long de la ligne VII-VII de la figure 2 ;
- la figure 8 est une vue en coupe le long de la ligne VIII-VIII, de la figure 2 ;
- la figure 9 est une vue en coupe le long de la ligne IX-IX, de la figure 2 ;
- la figure 10 est une vue en coupe le long de la ligne X-X, de la figure 2 ;
- la figure 11 est une vue en coupe de la ligne XI-XI, de la figure 2 ;
- la figure 12 est une vue en perspective de la portion inférieure d'un poteau selon la présente invention ; et
- la figure 13 est une vue en perspective dans une autre direction, de la portion inférieure du poteau.

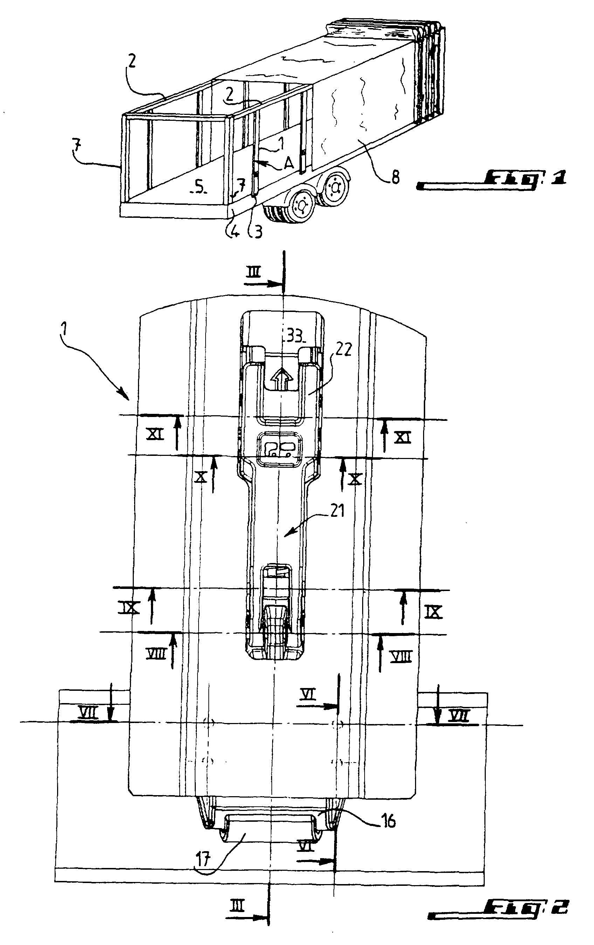

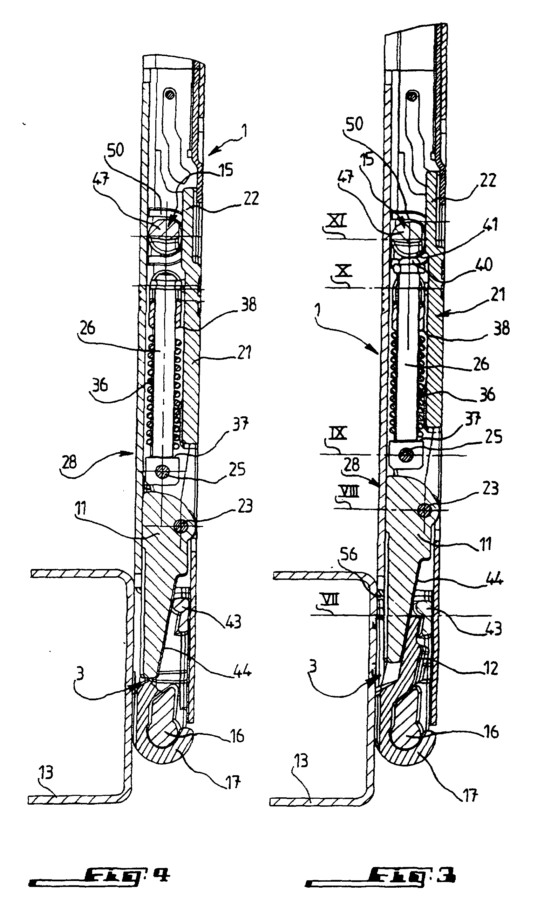

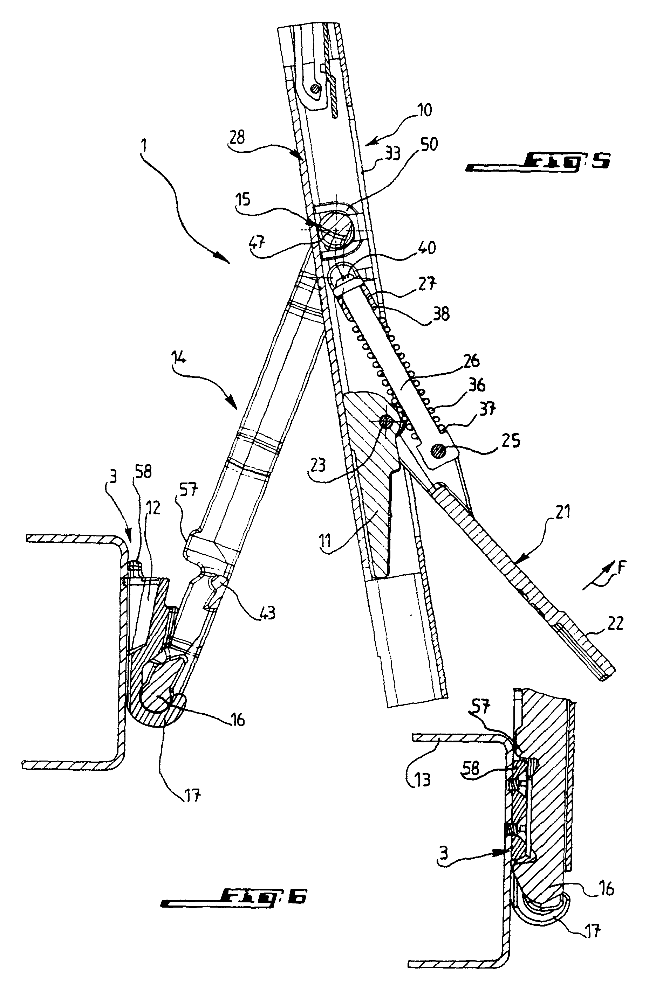

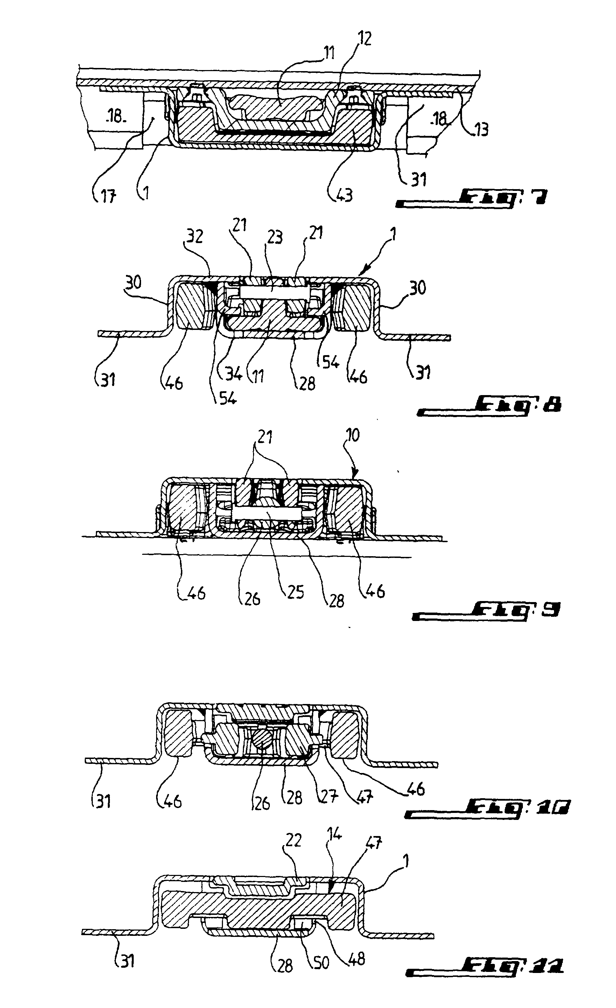

La figure 1 montre une semi-remorque qui est équipée d'une pluralité d'agencements A selon la présente invention, chacun comportant un poteau vertical 1 monté coulissant en translation entre un longeron horizontal supérieur 2 et un dispositif de support 3 monté fixe sur le côté latéral 4 du plateau 5 de la semi-remorque. Comme on le voit clairement sur la figure, cette plate-forme porte au niveau de chaque angle un montant 7, le longeron 2 reliant les extrémités supérieures des deux montants situés sur le même côté latéral longitudinal du plateau 5. Les montants 7, les longerons 2 et les poteaux 1 constituent la structure de support d'une bâche 8 qui peut être repoussée vers une extrémité de la semi-remorque, comme le montre la figure 1. C'est pour pouvoir ensuite charger et décharger la semi-remorque que les poteaux 1 sont déplaçables en translation.

Concernant le dispositif permettant le coulissement des poteaux 1 sur les longerons 2, il ne fait pas partie de l'invention et ne sera pas décrit par la suite. A titre d'exemple, la description d'un tel dispositif se trouve dans le brevet français N° 2 667 283 qui appartient à la Demanderesse.

Comme il ressort notamment des figures 3 et 5, un poteau 1 selon l'invention se compose essentiellement d'un élément poteau principal 10 qui est suspendu de façon déplaçable en translation en haut sur un longeron 2 et est pourvu d'un pêne 11 mobile dans la direction axiale de l'élément 10 dans celui-ci entre une position engagée dans une gâche 12 du dispositif de support 3 solidaire du plateau 5 au moyen d'un profilé en forme d'un U 13, et un bras pivotant 14 qui est articulé à son extrémité supérieure en 15 à l'élément de poteau 10 et dont l'extrémité inférieure est configuré en pied d'appui 16, s'engageant dans un berceau 17 horizontal, qui fait partie du dispositif de support 3. Le poteau 1 comporte encore un dispositif d'actionnement des moyens de verrouillage du poteau sur le support 3. Ce dispositif comprend un levier pivotant 21 se terminant par une poignée 22. Le levier est articulé à son autre extrémité, de façon pivotante autour d'un axe 23, au pêne 11. A cette extrémité est également articulée, au moyen d'un axe de pivotement 25 situé à une distance prédéterminée de l'axe d'articulation 23 en direction de l'extrémité de poignée 22, une tige de poussée 26 dont l'autre extrémité est guidée dans une chape 27 en forme d'un U monté pivotant dans un profilé 28 solidaire par les extrémités de ses branches de l'élément de poteau 10. Plus précisément, ce dernier est formé également par un profilé en Ω dont les branches 30 sont repliées vers l'extérieur, de 90°, pour former des ailettes 31. Le profilé 28 est alors fixé sur la face interne de la base 32 du Ω de façon que sa base 34 soit en alignement avec les ailettes 31 du profilé 10. La tige 26, qui présente une section transversale circulaire est entourée d'un ressort hélicoïdal 36 qui prend appui, par une extrémité sur un épaulement en saillie 37 de l'extrémité de la tige qui est articulée en 25 au levier d'actionnement 21 et par son autre extrémité contre une surface d'appui 38 de la chape de guidage 27. La tige 26 est reliée à la chape de guidage 27 par une goupille amovible 40. La tige 26 avec son ressort 36 traverse la base 32 du profilé 10 qui présente alors une fenêtre 33. Comme il ressort des figures 3 et 7, lorsque le levier 21 est amené à pivoter dans la direction de la flèche F (figure 5) la tige 26 est déplacée, à l'encontre de la force de rappel du ressort 36, en direction de l'extrémité d'articulation 15 du bras pivotant 14. On constate sur la figure 3 que, dans cette position, l'axe d'articulation 25 de la tige 26 se trouve par rapport à une droite reliant la zone de contact 41 à l'axe d'articulation 23 du levier 21 au pêne 11, à une certaine distance de cette droite, du côté du profilé de plateau 13. Etant donné que, dans cette position de fin de course du levier d'actionnement 21, l'élément principal de poteau 10 et le bras pivotant 14, sont axialement alignés, la tige 26, sous l'effet du ressort 36, assure un verrouillage de ces deux parties dans cette configuration alignée. Comme dans cette position le pêne 11 est engagé aussi dans la gâche 12 (figure 3), le verrouillage des deux parties du poteau assure ainsi le verrouillage du poteau dans son ensemble sur le profilé 13, c'est-à-dire sur le plateau du véhicule.

Selon une caractéristique avantageuse de l'invention, le poteau 1 est encore efficacement verrouillé sur le profilé de plateau 13 même en l'absence de la partie supérieure d'engagement du pêne 11, de la gâchette 12. Ce fait est illustré sur la figure 4 En effet, le bras pivotant 14 est pourvu d'une barrette transversale 43 qui prend appui, dans la position alignée de l'élément principal de poteau 10 et du bras 14, sur la face extérieure inclinée 44 du pêne 11. Comme cela ressort de la comparaison des figures 3 et 4, en l'absence de la gâche 12, le pêne 11 dont l'épaisseur diminue en direction de son extrémité se déplace plus vers le bas pour venir en butée contre la barrette 43.

En se reportant aux figures 6 à 13 on énoncera brièvement des particularités constructives des éléments constitutifs du poteau 1 dont la structure générale vient d'être décrite ci-dessus. Pour faciliter la compréhension des vues de détail 6 à 13, on a indiqué sur la figure 3 les niveaux des lignes de coupe figurant sur la figure de référence 2.

Sur les figures 5 et 7 on constate que la barrette 43 est solidaire du bras pivotant 14 et que sa section transversale perpendiculaire à l'axe longitudinal du levier présente un profil en U correspondant au profil extérieur de la section transversale de la gâche 12 pour pouvoir s'engager sur cette dernière dans la position de verrouillage du poteau sur le support 3.

Concernant le bras pivotant 14, notamment la figure 13 montre qu'il comporte essentiellement deux barres longitudinales parallèles 46 interconnectées en bas par l'organe de pied, et, à une certaine distance de ce dernier, par la barrette 43. A son extrémité supérieure les barres sont reliées par une traverse 47 qui passe à travers des lumières 48 pratiquées dans les branches 29 du profilé 28 et est engagée dans des éléments de palier 50 sur la face interne de ces branches 29. La traverse 47 et les paliers 50 constituent le dispositif de pivotement 15 indiqué sur la figure 5. On constate encore, notamment sur la figure 13, que les barres 46 du levier 14 comportent des excroissances 52 sur leurs faces en regard qui centrent le bras 14 sur les faces externes des branches 29 du profilé 28, dans la position d'alignement axial de l'élément principal de poteau 10 et du levier 14, en améliorant encore la tenue mécanique de cet ensemble dans sa position alignée.

Il est d'autre part à signaler que le pêne 11 est guidé à l'intérieur du profilé 28, comme on le voit sur la figure 8 où, dans la zone de la coupe que représente cette figure, le pêne présente un profile en T dont la partie transversale est guidée entre la base du profilé 28 et des pattes de guidage 54 découpées chacune dans une branche du profilé.

Il ressort encore notamment des figures 5 et 6 que les barres 46 du bras 14 présentent à leur base des excroissances 57 destinées à centrer sur les ailes extérieures 58 du support 3 du profilé de l'élément principal de plateau 10, lorsque celles-ci viennent en appui contre la partie supérieure du profilé de plateau 13.

Il est à noter que l'agencement peut-être livré et monté sous forme d'un kit et monté par le client. Après montage, pour des besoins de maintenance après installation, on peut par extraction de la goupille 40 sortir de son logement l'ensemble des pièces constitué par la poignée, le pêne, la tige et le ressort et le remplacer par un nouvel ensemble. Il suffit alors de reposer la goupille. L'aménagement de l'ouverture et la géométrie de l'agencement répondent à ce souci.

Bien entendu, de multiples modifications peuvent être apportées à l'agencement sans sortir du cadre de l'invention, tel que défini par le contenu des revendications 1 à 11.

## Revendications

1. Agencement de poteau coulissant pour véhicule bâché tel que remorque, semi-remorque ou wagon de chemin de fer, du type comprenant au moins un poteau (1) monté sur un côté du véhicule, coulissant en translation entre un longeron supérieur (2) sensiblement horizontal solidaire du véhicule et un dispositif de support (3) solidaire du plateau (5) du véhicule, le poteau comportant deux parties articulées l'une à l'autre (10, 14) et susceptibles d'être alignées, à savoir une partie supérieure (10) dont l'extrémité libre est montée coulissante en translation sur ledit longeron et une partie inférieure (14) dont l'extrémité inférieure est susceptible de prendre appui sur ledit dispositif de support, et des moyens de verrouillage du poteau sur ledit plateau et des deux parties dans une position axialement alignée lorsque le poteau est verrouillé sur le plateau, les moyens de verrouillage comportant un pêne (11) adapté pour s'engager dans une gâche (12) du dispositif de support, **caractérisé en ce qu'**il comporte des moyens (43,44) assurant le verrouillage du poteau (1) sur le dispositif de support (3) en l'absence de la partie d'engagement du pêne de la gâche (12).

2. Agencement selon la revendication 1, **caractérisé en ce que** le pêne (11) est monté axialement mobile sur la partie supérieure (10) du poteau (1) pour s'engager dans la gâche (12) du dispositif de support (3) et la partie inférieure du poteau est réalisée sous forme d'un bras pivotant (14) verrouillable sur la partie supérieure dans la position d'engagement du pêne (11) dans la gâche (12).

3. Agencement selon la revendication 2, **caractérisé en ce que** le bras pivotant (14) comporte un organe (43) assurant le verrouillage du poteau (1) sur le dispositif de support (3) par appui de cet organe (43) sur le pêne (11) lorsque les deux parties (10, 14) sont verrouillées, même en l'absence de la partie d'engagement du pêne, de la gâche.

4. Agencement selon la revendication 3, **caractérisé en ce que** le pêne est de forme conique se rétrécissant en direction de son extrémité d'engagement dans la gâche (12) et, en l'absence de cette dernière, se déplace jusqu'à une position plus basse de façon à ce que sa face inclinée (44) vienne en contact avec l'organe d'appui (43).

5. Agencement selon l'une des revendications précédentes, **caractérisé en ce qu'**il comprend un levier pivotant d'actionnement extérieur (21) adapté pour déplacer, lors de son pivotement, le pêne (11) d'une position de repos dans sa position d'engagement dans la gâche (12) et un organe de verrouillage (26) des deux parties (10, 14) du poteau (1) d'une position de repos dans la position d'alignement axiale des deux parties.

6. Agencement selon la revendication 5, **caractérisé en ce que** l'organe de verrouillage est formé par une tige (26) et est articulé en (25) au levier d'actionnement (21) et **en ce que** la ligne de force de la tige (26) se trouve, dans la position de verrouillage des parties (10 et 14), dans une position du côté d'une ligne neutre, qui est opposée à celle du repos.

7. Agencement selon la revendication 5 ou 6, **caractérisé en ce que** le levier d'actionnement (21) est articulé par son extrémité opposée à l'extrémité d'actionnement (22) en (23) au pêne (11), l'axe de pivotement (25) de l'organe (26) étant situé à une certaine distance de l'axe de pivotement (23), en direction de l'extrémité d'actionnement (22).

8. Agencement selon l'une des revendications 3 à 7, **caractérisé en ce que** le bras pivotant (14) est formé par deux barres parallèles (46) reliées en bas par la partie formant pied d'appui (16) et en haut par une traverse (47) montée rotative dans la partie supérieure (10) du poteau (1), l'organe (43) étant formé par une autre traverse intermédiaire entre les deux barres.

9. Agencement selon l'une des revendications 2 à 8, **caractérisé en ce que** la partie supérieure (10) du poteau est réalisée sous forme d'un profilé en forme d'un Ω s'étendant entre le longeron (2) et le dispositif de support (3) de façon que sa partie inférieure bride ce dernier et le bras pivotant (14) s'engage, dans la position d'alignement des deux parties, à l'intérieur du profilé (10) entre les deux branches de celui-ci.

10. Agencement selon l'une des revendications 6 à 9, **caractérisé en ce que** la tige (26) est reliée à une chape de guidage (27) montée pivotante sur la partie supérieure (10) du poteau (1) par l'intermédiaire d'une goupille amovible (40).

11. Agencement selon la revendication 10, **caractérisé en ce que**, par extraction de la goupille (40), l'ensemble formé par le levier (21), le pêne (11), la tige (26) et le ressort (36) est démontable et remplaçable par un nouvel ensemble.

## Patentansprüche

1. Gleitstangenanordnung für Planenfahrzeug, wie zum Beispiel einen Anhänger, einen Sattelauflieger oder einen Eisenbahnwaggon, des Typs mit wenigstens einer auf einer Seite des Fahrzeugs gleitend in Translation zwischen einem oberen Längsträger (2) deutlich horizontal fest mit dem Fahrzeug verbunden angebrachter Stange (1) und einer mit dem Auflieger (5) des Fahrzeugs fest verbundenen Haltevorrichtung (3), wobei die Stange zwei aneinander artikulierte Teile (10, 14) umfasst, die geeignet sind, fluchtartig angeordnet zu werden, nämlich einen oberen Teil (10), dessen freies Ende gleitend in Translation auf dem besagten Längsträger angebracht ist, und einen unterer Teil (4), dessen unteres Ende geeignet ist, sich auf der besagten Haltevorrichtung aufzustützen, und Verriegelungsmitteln der Stange, auf der der besagte Auflieger und die beiden Teile in einer axial fluchtartig angeordneten Position, wenn die Stange auf dem Auflieger verriegelt ist, wobei die Verriegelungsmittel einen Riegel (11) umfassen, der angepasst ist, um in einen Schließhaken (12) der Haltevorrichtung einzugreifen, **dadurch gekennzeichnet, dass** sie die Verriegelung der Stange (1) auf der Haltevorrichtung (3) bei Fehlen des Eingreifteils des Riegels des Schließhakens gewährleistende Mittel (43, 44) umfasst.

2. Anordnung gemäß Anspruch 1, **dadurch gekennzeichnet, dass** der Riegel (11) axial mobil auf dem oberen Teil (10) der Stange (1) angebracht ist, um in den Schließhaken (12) der Haltevorrichtung (3) einzugreifen, und der untere Teil der Stange in Form eines auf dem oberen Teil in der Eingreifposition des Riegels (11) im Schließhaken (12) verriegelbaren Schwenkarms (14) realisiert ist.

3. Anordnung gemäß Anspruch 2, **dadurch gekennzeichnet, dass** der Schwenkarm (14) ein die Verriegelung der Stange (1) auf der Haltevorrichtung (3) durch Aufstützen dieses Organs (43) auf dem Riegel (11) gewährleistende Organ (43) umfasst, wenn die beiden Teile (10, 14), selbst bei Fehlen des Eingreifteils des Riegels des Schließhakens verriegelt sind.

4. Anordnung gemäß Anspruch 3, **dadurch gekennzeichnet, dass** der Riegel in konischer, sich in Richtung seines Eingreifendes in den Schließhaken (12) verengender Form ist und bei Fehlen des letzteren sich bis zu einer unteren Position derart verschiebt, dass seine geneigte Fläche (44) mit dem Aufstützorgan (43) in Kontakt kommt.

5. Anordnung gemäß einem der vorherigen Ansprüche, **dadurch gekennzeichnet, dass** sie einen äußeren Betätigungsschwenkhebel (21) umfasst, der angepasst ist, um bei seinem Schwenken den Riegel (11) von einer Ruheposition in seine Eingreifposition in den Schließhaken (12) zu verschieben und ein Verriegelungsorgan (26) der beiden Teile (10, 14) der Stange (1) von einer Ruheposition in die axiale fluchtgerade Ausrichtposition der beiden Teile.

6. Anordnung gemäß Anspruch 5, **dadurch gekennzeichnet, dass** das Verriegelungsorgan durch einen Stift (26) gebildet wird und in (25) am Betätigungshebel (21) artikuliert wird und dass die Kraftlinie des Stiftes (26) sich in der Verriegelungsposition der Teile (10 und 14) befinden, in einer Position der Seite einer neutralen Linie, die der der Ruheposition gegenüber liegt.

7. Anordnung gemäß Anspruch 5 oder 6, **dadurch gekennzeichnet, dass** der Betätigungshebel (21) durch sein dem Betätigungsende (22) in (23) des Riegels (11) gegenüber liegendes Ende artikuliert ist, wobei die Schwenkachse (25) des Organs (26) sich in einem bestimmten Abstand der Schwenkachse (23) in Richtung des Betätigungsendes (22) befindet.

8. Anordnung gemäß Anspruch 3 bis 7, **dadurch gekennzeichnet, dass** der Schwenkarm (14) durch zwei parallele Stäbe (46) gebildet wird, die unten durch den einen Stützfuß (16) bildenden Teil verbunden sind und oben durch eine rotierend im oberen Teil (10) der Stange (1) angebrachte Traverse (47), wobei das Organ (43) durch eine andere Traverse zwischen den beiden Stäben gebildet wird.

9. Anordnung gemäß Anspruch 2 bis 8, **dadurch gekennzeichnet, dass** der obere Teil (10) der Stange in Form eines Profils in Form eines sich zwischen dem Längsträger (2) und der Haltevorrichtung (3) derart erstreckenden Qs gebildet wird, dass sein unterer Teil letzteren festklammert und der Schwenkarm (14) in die fluchtgerade Ausrichtposition der beiden Teile im Innern des Profils (10) zwischen den beiden Zweigen desselben.

10. Anordnung gemäß Anspruch 6 bis 9, **dadurch gekennzeichnet, dass** der Stift (26) mit einer schwenkend auf dem oberen Teil (10) der Stange (1) mittels eines abnehmbaren großen Stiftes (40) angebrachten Führungsabdeckung (27) verbunden ist.

11. Anordnung gemäß Anspruch 10, **dadurch gekennzeichnet, dass**, durch Herausziehen des großen Stiftes (40), der vom Hebel (21), dem Riegel (11), dem Stift (26) und der Feder (36) gebildete Aufbau durch einen neuen Aufbau abnehmbar und ersetzbar ist.

## Claims

1. Sliding pole fitting for a vehicle covered with a tarpaulin, such as a trailer, semitrailer or railway carriage and being of the type including at least one pole (1) mounted on one side of the vehicle and sliding in translation between an approximately horizontal upper side frame (2) integral with the vehicle and a support device (3) integral with the plate (5) of the vehicle, the pole comprising two portions (10, 14) joined to each other and able to be aligned, namely an upper portion (10) whose free extremity is mounted sliding in translation on said side frame, and a lower portion (14) whose lower extremity is able to take support on said support device, and means for locking the pole on said plate and two portions in an axially aligned position when the pole is locked on the plate, the locking means comprising a sliding bolt (11) which has been adapted so as to be engaged in a latch catch (12) of the support device, **characterised in that** it comprises means (43, 44) ensuring locking of the pole (1) on the support device (3) in the absence of the engaging portion of the sliding bolt of the latch catch (12).

2. Fitting according to claim 1, **characterised in that** the sliding bolt (11) is mounted axially mobile on the upper portion (10) of the pole (1) so as to be engaged in the latch catch (12) of the support device (3) and the lower portion of the pole is embodied in the form of a pivoting arm (14) able to be locked on the upper portion in the engaging position of the sliding bolt (11) in the latch catch (12).

3. Fitting according to claim 2, **characterised in that** the pivoting arm (14) comprises a member (43) ensuring locking of the pole (1) on the support device (3) via a support of this member (43) on the sliding bolt (11) when the two portions (10, 14) are locked, even in the absence of the engaging portion of the sliding bolt of the latch catch.

4. Fitting according to claim 3, **characterised in that** the shape of the sliding bolt is conical and narrows in the direction of its engaging extremity in the latch catch (12) and, in the absence of the latter, moves to a lower position so that its slanted face (44) comes into contact with the support member (43).

5. Fitting according to one of the preceding claims, **characterised in that** it includes an external activation pivoting lever (21) which has been adapted so as to move when pivoting the sliding bolt (11) from an idle position into its engaging position, in the latch catch (12) and a member (26) for locking the two portions (10, 14) of the pole (1) from an idle position into the axial alignment position of the two portions.

6. Fitting according to claim 5, **characterised in that** the locking member is formed by a rod (26) and is joined at (25) to the activation lever (21) and **in that** the force line of the rod (26) is located in the position for locking the portions (10 and 14) in a position on the side of a neutral line which is opposite that of the idle position.

7. Fitting according to claim 5 or 6, **characterised in that** the activation lever (21) is joined by its extremity opposite the activation extremity (22) at (23) to the sliding bolt (11), the spin axis (25) of the member (26) being situated at a certain distance from the spin axis (23) in the direction of the activation extremity (22).

8. Fitting according to one of claims 3 to 7, **characterised in that** the pivoting arm (14) is formed by two parallel bars (46) connected at the bottom by the portion forming a support foot (16) and at the top by a crossmember (47) mounted rotating in the upper portion (10) of the pole (1), the member (43) being formed by another intermediate crossmember between the two bars.

9. Fitting according to one of claims 2 to 8, **characterised in that** the upper portion (10) of the pole is embodied in the form of a 0-shaped section extending between the side frame (2) and the support device (3) so that its lower portion flanges the latter and the pivoting arm (14) is engaged in the alignment position of the two portions inside the section (10) between the two branches of the latter.

10. Fitting according to one of claims 6 to 9, **characterised in that** the rod (26) is connected to a guiding fork joint (27) mounted pivoting on the upper portion (10) of the pole (1) by means of a movable pin (40).

11. Fitting according to claim 10, **characterised in that**, by extracting the pin (40), the unit formed by the lever (21), the sliding bolt (11), the rod (26) and the spring (36) can be dismantled and replaced by a new unit.
